(19) **Europäisches Patentamt / European Patent Office / Office européen des brevets**

(11) **EP 3 603 767 A1**

(12) **EUROPEAN PATENT APPLICATION**
published in accordance with Art. 153(4) EPC

(43) Date of publication:
**05.02.2020 Bulletin 2020/06**

(21) Application number: **18772516.3**

(22) Date of filing: **22.03.2018**

(51) Int Cl.:
**B01D 39/16** (2006.01)  **B03C 3/28** (2006.01)
**B32B 5/02** (2006.01)  **D04H 1/4382** (2012.01)
**D04H 3/016** (2012.01)

(86) International application number:
**PCT/JP2018/011460**

(87) International publication number:
**WO 2018/174176 (27.09.2018 Gazette 2018/39)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **24.03.2017 JP 2017058384**

(71) Applicant: **Japan Vilene Company, Ltd.**
**Tokyo 104-8423 (JP)**

(72) Inventors:
• **ISHIBASHI Tatsuro**
  **Moriyama-shi**
  **Shiga (JP)**
• **TANAKA Hiroshi**
  **Moriyama-shi**
  **Shiga (JP)**

(74) Representative: **van Dam, Vincent**
**Octrooibureau Vriesendorp & Gaade B.V.**
**Koninginnegracht 19**
**2514 AB Den Haag (NL)**

(54) **CHARGED FILTER MEDIUM AND METHOD FOR MANUFACTURING CHARGED FILTER MEDIUM**

(57)　The object of the present invention is to provide a charged filter medium having excellent filtration performance and a method of producing the charged filter medium. Though the present invention is a charged filter medium comprising a charged laminate formed by laminating and integrating a fine fiber layer in which a median fiber diameter of constituent fibers is less than 2.5 $\mu$m and a basis weight is less than 13 g/m$^2$; and a support fiber layer, a pressure drop of the charged filter medium at a wind speed of 10 cm/s is 24 Pa or less; and a particle collection efficiency of particles having a particle diameter of 0.3 to 0.5 $\mu$m at a wind speed of 10 cm/s is 76% or more, and thus the pressure drop and the particle collection efficiency are well balanced. Since the method of producing the charged filter medium comprises a step of laminating and integrating the fine fiber fabric and the support fabric to prepare a laminate, the fine fiber fabric can be subjected to a polar liquid charging method in a state of being reinforced by the support fabric. As a result, an excellent charged filter medium in which the pressure drop and the particle collection efficiency are well balanced, can be produced.

EP 3 603 767 A1

**Description**

TECHNICAL FIELD

The present invention relates to a charged filter medium and a method of producing a charged filter medium.

BACKGROUND ART

Conventionally, a filter medium that has a high particle collection efficiency and low pressure drop of particles (e.g., particles contained in the atmosphere, or particles discharged from OA equipment such as printers) are required. However, the pressure drop and the particle collection efficiency are generally in a trade-off relationship. The pressure drop tends to increase, when a constituent fiber diameter of the filter medium is reduced to improve the particle collection efficiency. The particle collection efficiency tends to decrease, when a basis weight of the filter medium is lightened to reduce the pressure drop.

Therefore, there is a demand for a filter medium that is excellent in balance between the pressure drop and the particle collection efficiency (hereinafter, sometimes referred to as a filter medium having excellent filtration performance).

In order to realize a filter medium having excellent filtration performance, a charged filter medium including a charged fabric (e.g., a nonwoven fabric, a woven fabric, a knitted fabric, or the like) has been studied.

As a method of charging a fabric, a charging method by applying a high voltage to the fabric (a corona charging method), a charging method by friction of a plurality of types of fibers that can be charged by rubbing each other (a tribo charging method), a charging method by adding a polar liquid to a fabric, followed by applying a force to the fabric via the polar liquid (a polar liquid charging method), and the like are known. Among these charging methods, a polar liquid charging method is known as a charging method capable of uniformly charging the entire constituent fibers in the fabric and further improving the charging performance of the fabric.

The charged fabric described above as it is or in a state of being laminated and integrated with a support such as a spunbond nonwoven fabric or the like, is used as a charged filter medium comprising a fiber layer derived from the fabric. In reference to such a charged filter medium, for example, the following conventional techniques have been known.

- JP 2002-001020 (Patent Literature 1): Patent Literature 1 discloses that as a fabric capable of being subjected to a polar liquid charging method, a fabric having a basis weight of 5 to 60 g/m$^2$ and a fabric consisting of fibers having an average fiber diameter of 5 $\mu$m or less, may be adopted. Examples disclose a charged filter medium obtained by charging a melt blown nonwoven fabric consisting of fibers having a basis weight of 20 g/m$^2$ and an average fiber diameter of 1.6 $\mu$m by a polar liquid charging method.

Patent Literature 1 discloses that the polar liquid charged fabric and a support can be laminated and integrated by a hot melt resin or ultrasonic waves.

- JP 2003-205210 (Patent Literature 2): Patent Literature 2 discloses a charged filter medium obtained by charging a melt blown nonwoven fabric consisting of fibers having a basis weight of 41 g/m$^2$ and an average fiber diameter of 5 $\mu$m by a polar liquid charging method.

Patent Literature 2 discloses that the fabric and a support are conveyed together, ultrasonic vibration is applied, and thereby the fabric and the support can be fused, laminated and integrated, and subjected to polar liquid charging.

- JP 2004-066026 (Patent Literature 3): Patent Literature 3 discloses that as a fabric capable of being subjected to a polar liquid charging method, a fabric having a basis weight of 5 to 100 g/m$^2$ and a fabric consisting of fibers having an average fiber diameter of 1 to 20 $\mu$m, may be adopted. Examples disclose a charged filter medium obtained by charging a melt blown nonwoven fabric consisting of fibers having a basis weight of 40 g/m$^2$ and an average fiber diameter of 2.9 $\mu$m by a polar liquid charging method.

Patent Literature 3 discloses that the fabric and a support can be laminated and subjected to polar liquid charging.

CITATION LIST

PATENT LITERATURE

Patent Literature 1: JP 2002-001020
Patent Literature 2: JP 2003-205210
Patent Literature 3: JP 2004-066026

## SUMMARY OF THE INVENTION

### TECHNICAL PROBLEM

Based on the above information, the inventors of the present application have studied subjecting a fabric in which a median fiber diameter of constituent fibers is 2.5 $\mu$m and a basis weight is 13 g/m$^2$, to polar liquid charging, for the purpose of providing a filter medium having excellent filtration performance (charged filter medium). However, the charged filter medium prepared as described above was still not satisfactory in filtration performance.

Therefore, the inventors of the present application have further studied subjecting a fabric in which a median fiber diameter of constituent fibers is smaller and a basis weight is smaller, to polar liquid charging, for the purpose of improving the filtration performance. However, a charged filter medium itself could not be provided.

That is, a fabric having a small fiber diameter and a small basis weight is inferior in strength and structural stability. Therefore, cracks may occur in the fabric and/or a large deformation may occur due to large contraction or expansion of the fabric, in each step where a force related to a polar liquid charging method is applied, including a step of adding a polar liquid to the fabric, a step of applying a force to the fabric via the polar liquid, and a step of removing the polar liquid from the fabric. As a result, a filter medium could not be prepared.

This problem is a new problem not disclosed in the background art, which occurs specifically when a fabric having a median fiber diameter less than 2.5 $\mu$m and a basis weight less than 13 g/m$^2$ is subjected to polar liquid charging.

In order to solve the above mentioned problem, with reference to the disclosure of Patent Literature 2, the inventors of the present application have studied subjecting a fabric to a polar liquid charging method, by conveying the fabric and a support together and applying ultrasonic vibration, to fuse, laminate and integrate the fabric and the support. In addition, with reference to the disclosure of Patent Literature 3, the inventors of the present application have studied subjecting to a polar liquid charging method in a state where the fabric and the support are laminated.

However, in any of the above studies, various forces acted on the fabric in a free state in each step related to a polar liquid charging method. Therefore, the problem that cracks or large deformation occur to the fabric, still occurs.

Therefore, it was required to realize a charged filter medium having excellent filtration performance, comprising a charged fabric (fabric derived fiber layers) having a median fiber diameter less than 2.5 $\mu$m and a basis weight less than 13 g/m$^2$.

An object of the present invention is to provide a charged filter medium having excellent filtration performance, comprising a charged fiber layer having a median fiber diameter less than 2.5 $\mu$m and a basis weight less than 13 g/m$^2$.

### SOLUTION TO THE PROBLEM

The invention according to claim 1 of the present invention is "a charged filter medium comprising a charged laminate formed by laminating and integrating a fine fiber layer in which a median fiber diameter of constituent fibers is less than 2.5 $\mu$m and a basis weight is less than 13 g/m$^2$; and a support fiber layer, wherein a pressure drop of the charged filter medium at a wind speed of 10 cm/s is 24 Pa or less; and a particle collection efficiency of particles having a particle diameter of 0.3 to 0.5 $\mu$m at a wind speed of 10 cm/s is 76% or more."

Further, the invention according to claim 2 of the present invention is "a method of producing a charged filter medium comprising a charged laminate, the method comprising: a step of preparing a fine fiber fabric in which a median fiber diameter of constituent fibers is less than 2.5 $\mu$m and a basis weight is less than 13 g/m$^2$, a step of preparing a support fabric, a step of laminating and integrating the fine fiber fabric and the support fabric to prepare a laminate, and a step of adding a polar liquid to the laminate, applying a force to the laminate via the polar liquid, and then removing the polar liquid from the laminate, to charge the laminate."

### ADVANTAGEOUS EFFECTS OF THE INVENTION

The present invention is a charged filter medium comprising a charged laminate formed by laminating and integrating a fine fiber layer in which a median fiber diameter of constituent fibers is less than 2.5 $\mu$m and a basis weight is less than 13 g/m$^2$; and a support fiber layer.

The charged filter medium of the present invention comprises a fine fiber layer in which a median fiber diameter of constituent fibers is small and a basis weight is small. However, the charged filter medium of the present invention is an excellent charged filter medium having a good balance between a pressure drop and a particle collection efficiency, wherein a pressure drop of the charged filter medium at a wind speed of 10 cm/s is 24 Pa or less; and a particle collection efficiency of particles having a particle diameter of 0.3 to 0.5 $\mu$m at a wind speed of 10 cm/s is 76% or more.

In addition, the method for producing a charged filter medium according to the present invention comprises a step of preparing a laminate by laminating and integrating a fine fiber fabric in which a median fiber diameter of constituent fibers is less than 2.5 $\mu$m and a basis weight is less than 13 g/m$^2$ and a support fabric. Accordingly, the fine fiber fabric can be subjected to a polar liquid charging method in a state that the fine fiber fabric is reinforced with the support fabric.

Therefore, it is possible to prevent the problem of the occurrence of cracks or large deformation of the fabric which are caused by various forces acting on the fine fiber fabric in a state of being reinforced by the support fabric in each step related to a polar liquid charging method.

As a result, it is possible to produce a charged filter medium having a good balance between a pressure drop and a particle collection efficiency of particles, wherein a pressure drop of the charged filter medium at a wind speed of 10 cm/s is 24 Pa or less; and a particle collection efficiency of particles having a particle diameter of 0.3 to 0.5 $\mu$m at a wind speed of 10 cm/s is 76% or more.

DESCRIPTION OF THE INVENTION

In the present invention, various configurations such as the following configurations can be appropriately selected, in order to provide a charged filter medium having excellent filtration performance.

The charged filter medium of the present invention comprises a fine fiber layer and a support fiber layer.

A median fiber diameter of constituent fibers in the fine fiber layer is less than 2.5 $\mu$m. The less the median fiber diameter is, the more the particle collection efficiency of the charged filter medium tends to be improved. However, when the median fiber diameter is too small, the pressure drop of the charged filter medium may become excessively high. Therefore, the median fiber diameter is appropriately adjusted so as to provide a charged filter medium having a low pressure drop and excellent filtration performance in which an excessively high pressure drop of the charged filter medium is prevented. The median fiber diameter of the constituent fibers in the fine fiber layer is preferably 1.0 $\mu$m or more and 2.1$\mu$m or less, and can be 1.1 $\mu$m to 2 $\mu$m, 1.2 $\mu$m to 1.9 $\mu$m, or 1.4 $\mu$m to 1.7 $\mu$m.

The median fiber diameter can be calculated by the following method.

(Method of calculating a median fiber diameter)

Fiber diameters of respective fibers in the 1,000x electron micrograph of the fabric taken are measured. The fiber diameter values of respective fibers are arranged in the order from the fiber having the smallest fiber diameter to the fiber having the largest one. The median value of the fiber diameter values is defined as the median fiber diameter.

That is, in the case that the number of measured fibers is an odd number (2n+1, n is a natural number), the median fiber diameter is the fiber diameter of the n+1th fiber when the fiber diameter values of respective fibers are arranged in the order from the fiber having the smallest fiber diameter to the fiber having the largest one. As an example, in the case that the arranged fiber diameter values of the fibers are 1.1 $\mu$m, 2.1 $\mu$m, 4.1 $\mu$m, the median fiber diameter is 2.1 $\mu$m. In the case that the number of measured fibers is an even number (2n, n is a natural number), the median fiber diameter is the average value of the fiber diameter of the nth fiber and the fiber diameter of the n+1th fiber when the fiber diameter values of respective fibers are arranged in the order from the fiber having the smallest fiber diameter to the fiber having the largest one. As an example, in the case that the arranged fiber diameter values of the fibers are 1.1 $\mu$m, 1.9 $\mu$m, 2.3 $\mu$m, 4.1 $\mu$m, the median fiber diameter is 2.1 $\mu$m.

When the cross sectional shape of the fiber is non-circular, a diameter of a circle having the same area as the cross sectional area is regarded as the fiber diameter.

In addition, the less the average fiber diameter of the fine fiber layer is, the more the particle collection efficiency of the charged filter medium tends to be improved. However, when the average fiber diameter is too small, the pressure drop of the charged filter medium may become excessively high. Therefore, the average fiber diameter of the constituent fibers in the fine fiber layer is appropriately adjusted. The average fiber diameter of the constituent fibers in the fine fiber layer is preferably 1 $\mu$m or more, and can be 1.2 $\mu$m to 1.9 $\mu$m, or 1.4 $\mu$m to 1.7 $\mu$m, Although the upper limit may be appropriately selected, the average fiber diameter is preferably 2.1 $\mu$m or less.

The average fiber diameter herein refers to an arithmetic average value of fiber diameter values of respective fibers obtained by measuring fiber diameters of respective fibers in the 1,000x electron micrograph of the fabric.

In addition, a fiber diameter distribution of a nonwoven fabric prepared by a electrostatic spinning method described later is sharp. Therefore, regarding a certain electrostatic spun nonwoven fabric, the median fiber diameter and the average fiber diameter tend to be equivalent values. On the other hand, a fiber diameter distribution of a nonwoven fabric prepared by a melt blow method is broad. Therefore, regarding a certain melt blown nonwoven fabric, the median fiber diameter and the average fiber diameter tend to be greatly different. Specifically, when the median fiber diameter value of the fibers constituting the melt blown nonwoven fabric is compared with the average fiber diameter value, the median fiber diameter value tends to be less than the average fiber diameter value.

A fiber length of the fibers constituting the fine fiber layer is not particularly limited, but either of a short fiber, a long fiber, or a continuous fiber having a fiber length that is substantially difficult to be measured, or a plurality of the fibers having the above mentioned fiber lengths may be present.

When a fiber constituting the fine fiber layer has a continuous length, the rigidity of the fine fiber layer is easily improved, and thus, a charged filter medium having excellent strength can be preferably provided. Therefore, it is preferable that a fiber constituting the fine fiber layer is composed only of the fiber having a continuous length. In addition, the fiber having a continuous length can be prepared using a direct spinning method such as a melt blown method and a spun bond method.

Constituent fibers in the fine fiber layer may be fibers comprising a known resin, which includes, for example, a polyolefin resin (a polyethylene, a polypropylene, a polymethylpentene, a polyolefin resin having a structure in which a part of hydrocarbon is substituted with cyano or a halogen such as fluorine or chlorine, etc.); a styrene resin; a polyether resin (a polyether ether ketone, a polyacetal, a phenol resin, a melamine resin, a urea resin, an epoxy resin, a modified polyphenylene ether, an aromatic polyether ketone, etc.); a polyester resin (a polyethylene terephthalate, a polytrimethylene terephthalate, a polybutylene terephthalate, a polyethylene naphthalate, a polybutylene naphthalate, a polycarbonate, a polyarylate, a wholly aromatic polyester resin, an unsaturated polyester resin, etc.); a polyimide resin; a polyamideimide resin, a polyamide resin (e.g., an aromatic polyamide resin, an aromatic polyetheramide resin, a nylon resin, etc.); a resin having nitrile groups (e.g., a polyacrylonitrile, etc.); an urethane resin; an epoxy resin; a polysulfone resin (a polysulfone, a polyethersulfone, etc.); a fluorine resin (a polytetrafluoroethylene, a polyvinylidene fluoride, etc.); a cellulose resin; a polybenzimidazole resin; an acrylic resin (e.g., a polyacrylonitrile resin copolymerized with an acrylic ester or methacrylic ester, a modacrylic resin copolymerized with acrylonitrile and vinyl chloride or vinylidene chloride, etc.); and the like.

In particular, when the constituent fibers in the fine fiber layer contains a resin having a volume resistivity value of $10^{14}$ $\Omega\cdot$cm or more (more preferably, when it is composed only of a resin having a volume resistivity value of $10^{14}$ $\Omega\cdot$cm or more), the charge amount of the fine fiber layer can be increased by a polar liquid charging method described later, and thus a charged filter medium having excellent filtration performance can be preferably provided. Examples of the resin having a volume resistivity value of $10^{14}$ $\Omega\cdot$cm or more include a polyolefin resin (e.g., a polyethylene resin, a polypropylene resin, a polymethylpentene resin, a polystyrene resin, etc.); a polytetrafluoroethylene; a polyvinylidene chloride; a polyvinyl chloride; a polyurethane and the like.

These resins may be composed of either a linear polymer or a branched polymer, and the resins may be a block copolymer or a random copolymer. The resins may have any three dimensional structure or crystallinity of the resins. Further, the resins may be a mixture of a plurality of resins.

It is preferable to mix a charging aid with the resin contained in the constituent fibers in the fine fiber layer (particularly, the resin having a volume resistivity value of $10^{14}$ $\Omega\cdot$cm or more), so as to provide a charged filter medium having excellent filtration performance by increasing the charge amount of the fine fiber layer.

The charging aid such as one, two or more compounds selected from a hindered amine compound, an aliphatic metal salt (e.g., a magnesium salt of stearic acid, an aluminum salt of stearic acid, etc.), and an unsaturated carboxylic acid modified polymer, can be added as an additive. A hindered amine compound is preferably added among these series of additives. Specific examples thereof include poly{(6-(1,1,3,3-tetramethylbutyl)imino-1,3,5-triazine-2,4-diyl){(2,2,6,6-tetramethyl-4-piperidyl)imino}hexamethylene{(2,2,6,6-tetramethyl-4-piperidyl)imino}}, a polycondensate of dimethyl succinate-1-(2-hydroxyethyl)-4- hydroxy-2,2,6,6-tetramethylpiperidine, bis(1,2,2,6,6-pentamethyl-4-piperidyl) 2-(3,5-di-t-butyl - 4-hydroxybenzyl)-2-n-butylmalonate, etc.

An addition mass of the charging aid with respective to the mass of the resin is not particularly limited, but when the addition mass of the charging aid is too small, the charging effect of the fine fiber layer may be less than expected. Moreover, when the addition mass of the charging aid is too much, the strength of the fine fiber layer may be inferior. For this reason, the addition mass of the charging aid is preferably 0.01% by mass to 5% by mass with respect to 100% by mass of the resin.

The constituent fibers in the fine fiber layer can be prepared by a known method such as a melt spinning method, a dry spinning method, a wet spinning method, a direct spinning method (a melt blown method, a spun bond method, an electrostatic spinning method, a spinning method using a centrifugal force, a spinning method using an accompanying airflow described in JP 2011-012372, etc., a neutralization spinning method described in JP 2005-264374, etc.), a method of extracting a fiber having a small diameter by removing one or more types of resin components from a composite fiber.

In particular, the fine fiber layer is preferably a fiber layer derived from a fabric prepared using a direct spinning method, so as to be the fine fiber layer in which the filtration performance of the charged filter medium can be improved by uniformly dispersing the fibers even though the fiber diameter is small and the basis weight is small. A melt blown nonwoven fabric can be appropriately adopted as a fabric capable of providing such fine fiber layer.

The constituent fibers in the fine fiber layer may be composed of one kind of resin or may be composed of a plurality of kinds of resins. The fiber composed of a plurality of kinds of resins may be one generally referred to as a composite fiber, such as a core-sheath type, a sea-island type, a side-by-side type, an orange type, a bimetal type, or the like.

The fine fiber layer may contain a plurality of kinds of fibers as constituent fibers. For example, when the fine fiber layer contains adhesive fibers in addition to the fibers forming the skeleton, the fibers forming the skeleton are bonded and integrated with each other by the adhesive fibers, so that an unintentional change of the structure of the fine fiber layer, and detachment of the fibers from the charged filter medium can be inhibited, and an unintentional reduction of the filtration performance of the charged filter medium can be prevented. The kind of adhesive fibers may be appropriately selected. For example, a core-sheath type adhesive fiber, a side-by-side type adhesive fiber, or an all melt type adhesive fiber can be adopted. The fine fiber layer may further contain a latent crimped fiber to form crimps by heating, in addition to the adhesive fibers.

In addition, the fine fiber layer may include a substantially circular fiber or an elliptical fiber, or further a modified cross section fiber, regarding the cross section shape of the constituent fiber. Examples of a modified cross section fiber include fibers having a fiber cross section shape including a polygonal shape such as a triangular shape, an alphabetic character shape such as a Y shape, an irregular shape, a multi-leaf shape, a symbolic shape such as an asterisk shape, or a shape in which a plurality of these shapes are combined.

The fine fiber layer may be configured by intertwining the constituent fibers. The fine fiber layer may be also configured by melting a part of the constituent fibers, and melting and integrating the constituent fibers, or by bonding and integrating the constituent fibers by a binder.

In particular, when the constituent fibers are melted and integrated by melting a part of the constituent fibers, preferably an increase of a pressure drop due to presence of the binder can be prevented, and an unintentional change of the structure of the fine fiber layer, and detachment of the fibers from the charged filter medium can be inhibited, and an unintentional reduction of the filtration performance of the charged filter medium can be prevented.

Such fine fiber layer in which a part of the constituent fibers are melted and the constituent fibers are melted and integrated, can be prepared by using a direct spinning method such as a melt blown method or a spun bond method.

A basis weight of the fine fiber layer is less than 13 $g/m^2$. Although the pressure drop of the charged filter medium can be reduced as the basis weight is less, the particle collection efficiency of the charged filter medium may be excessively reduced when the basis weight is too small. Therefore, the basis weight of the fine fiber layer is more than 0 $g/m^2$, and the range thereof can be 3 $g/m^2$ to 10 $g/m^2$, 4 $g/m^2$ to 9 $g/m^2$, or 5 $g/m^2$ to 8 $g/m^2$.

The basis weight of the fine fiber layer in the charged filter medium can be calculated by the following method.

(Method of calculating a basis weight of a fine fiber layer)

In the case that the fine fiber layer can be easily isolated from the charged filter medium, the weight of the fine fiber layer obtained by isolation is measured, and the basis weight ($g/m^2$) of the fine fiber layer is calculated by converting the weight into the weight per 1 $m^2$ of the area of the widest surface (main surface) of the obtained fine fiber layer.

In the case that the fine fiber layer cannot be easily isolated from the charged filter medium, first, the weight (A) of the charged filter medium is measured. Next, the fine fiber layer is removed from the charged filter medium, and the weight (B) of the remaining structure is measured. Then, the weight of the fine fiber layer is calculated from the value obtained by subtracting the weight B from the weight A.

The weight of the fine fiber layer calculated in this way is converted into the weight per 1 $m^2$ of the area of the widest surface (main surface) of the obtained fine fiber layer, to calculate the basis weight ($g/m^2$) of the fine fiber layer.

A thickness of the fine fiber layer can be appropriately selected, and can be 0.01 mm to 1 mm, 0.02 mm to 0.5 mm, or 0.03 mm to 0.3 mm.

The thickness of the fine fiber layer can be calculated by the following method.

(Method of calculating a thickness of a fine fiber layer)

In the case that the fine fiber layer can be easily isolated from the charged filter medium, the length between the main surface of the fine fiber layer obtained by isolation and the other main surface when a load of 20 $g/m^2$ is applied on the main surface toward the other main surface, is measured using a high-precision digital length measuring apparatus, and the measured length is defined as the thickness of the fine fiber layer (mm).

In the case that the fine fiber layer cannot be easily isolated from the charged filter medium, first, the length between the main surface of the charged filter medium and the other main surface when a load of 20 $g/m^2$ is applied on the main surface toward the other main surface, is measured using a high-precision digital length measuring apparatus, and the measured length is defined as the thickness (A) of the charged filter medium. Next, after removing the fine fiber layer from the charged filter medium, the length between the main surface of the remaining structure and the other main surface when a load of 20 $g/m^2$ is applied on the main surface toward the other main surface, is measured using a high-precision digital length measuring apparatus, and the measured length is defined as the thickness (B) of the structure. Then, the remaining value after subtracting the thickness B from the thickness A is defined as the thickness of the fine fiber layer (mm).

The support fiber layer is a fiber layer mainly responsible for supporting the fine fiber layer. The support fiber layer preferably has a configuration capable of preventing the fine fiber layer from being cracked or greatly deformed when subjecting the later mentioned laminate to a polar liquid charging method. The support fiber layer may be, for example, fiber layers having a higher rigidity and breaking strength than the fine fiber layer, or fiber layers having a larger fiber diameter than the fine fiber layer, so as to support the fine fiber layer.

The configuration of the support fiber layer can be appropriately selected from the same configuration as the above described configuration that can be adopted for the fine fiber layer, so that a charged filter medium having excellent filtration performance can be provided.

In particular, in the case that the constituent fibers in the support fiber layer contain a polyester resin (more preferably, the constituent fibers are composed only of a polyester resin), in the case that the support fiber layer is fiber layers in which fibers having continuous length are bonded to each other, for example, a spunbond nonwoven fabric (more preferably, the support fiber layer is a spunbond nonwoven fabric), or in the case that the support fiber layer fibers contains a modified cross section fiber (more preferably, in the case that the constituent fibers is composed only of a modified cross section fiber), the support fiber layer has excellent rigidity, and the fine fiber layer can be more firmly supported. Thus, when the later described laminate is subjected to a polar liquid charging method, the fine fiber layer can be prevented from cracks or great deformation of the fine fiber layer. As a result, a charged filter medium having excellent filtration performance can be preferably provided. Therefore, the support fiber layer is preferably a polyester spunbonded nonwoven fabric having an irregular cross section.

Further, in the case that the constituent fibers in the support fiber layer contain a polyethylene terephthalate fiber (more preferably, in the case that the constituent fibers is composed only of a polyethylene terephthalate fiber), as described later, lamination and integration of the fine fiber layer and the support fiber layer are effectively performed, and when the later described laminate is subjected to a polar liquid charging method, the fine fiber layer can be prevented from cracks or great deformation of the fine fiber layer. As a result, a charged filter medium having excellent filtration performance can be preferably provided.

The support fiber layer may be configured by intertwining the constituent fibers, but also may be configured by melting and integrating a part of the constituent fibers, or by bonding and integrating the constituent fibers by a binder.

In particular, when a part of the constituent fibers is melted and integrated, an increase of the pressure drop due to presence of the binder can be prevented, and unintentional change of the structure of the support fiber layer and removal of the fibers from the charged filter medium can be inhibited, and decrease of the filtration performance of the charged filter medium can be preferably prevented.

Such support fiber layer in which a part of the constituent fibers is melted and integrated, may be prepared by using a direct spinning method such as a melt blown method or a spun bond method.

A fineness of the constituent fibers in the support fiber layer, and a basis weight and a thickness of the support fiber layer are appropriately selected. The less the fineness value is, the more the particle collection efficiency of the charged filter medium tends to improve. However, when the fineness value is too small, the pressure drop of the charged filter medium may become excessively high. Therefore, the fineness of the constituent fibers in the support fiber layer can be 1 dtex to 100 dtex, 2 dtex to 50 dtex, or 3 dtex to 30 dtex. The lower limit of the fineness can be appropriately selected, but is actually a value larger than 0.1 dtex.

The basis weight of the support fiber layer can be appropriately selected. The less the basis weight is, the more the pressure drop of the charged filter medium can be reduced. However, when the basis weight is too small, the particle collection efficiency of the charged filter medium may be excessively reduced. Therefore, the basis weight of the support fiber layer is heavier than 0 g/m$^2$, and the range can be 20 g/m$^2$ to 200 g/m$^2$, 30 g/m$^2$ to 150 g/m$^2$, or 40 g/m$^2$ to 100 g/m$^2$.

The basis weight of the support fiber layer in the charged filter medium can be calculated by the following method.

(Method of calculating a basis weight of a support fiber layer)

In the case that the support fiber layer can be easily isolated from the charged filter medium, the weight of the support fiber layer obtained by isolation is measured, and the basis weight (g/m$^2$) of the support fiber layer is calculated by converting the weight into the weight per 1 m$^2$ of the area of the widest surface (main surface) of the obtained support fiber layer.

In the case that the support fiber layer cannot be easily isolated from the charged filter medium, the structure other than the support fiber layer is removed from the charged filter medium. The basis weight is calculated from such obtained support layers in the same manner as described above.

The thickness of the support fiber layer can be appropriately selected, and can be 0.1 mm to 2 mm, 0.15 mm to 1.5 mm, or 0.2 mm to 1 mm.

The thickness of the support fiber layer can be calculated by the following method.

(Method of calculating a thickness of a support fiber layer)

In the case that the support fiber layer can be easily isolated from the charged filter medium, the length between the main surface of the support fiber layer obtained by isolation and the other main surface when a load of 20 g/m$^2$ is applied on the main surface toward the other main surface, is measured using a high-precision digital length measuring apparatus, and the measured length is defined as the thickness of the support fiber layer (mm).

In the case that the support fiber layer cannot be easily isolated from the charged filter medium, the structure other than the support fiber layer is removed from the charged filter medium. The thickness is calculated from such obtained support layers in the same manner as described above.

Further, for example, fibers or a fabric produced by adding an oil, a dispersing agent, a surfactant or the like in a manufacturing process, for example, a dry nonwoven fabric or a wet nonwoven fabric, are adhered by residues such as the oil, the dispersant or the surfactant on the fiber surface. When a laminate configured by such fibers or fabric is subjected to a polar liquid charging method according to the present invention, the residues are eluted from the fibers or fabric into the polar liquid, and the electric charge of the laminate is greatly impaired, and a charged filter medium satisfying the pressure drop and the particle collection efficiency specified by the present invention may not be provided.

For this reason, it is preferable that the fine fiber layer and/or the support fiber layer are configured by fibers or a fabric produced without adding an oil, a dispersant, a surfactant or the like that may become residues capable of being dissolved into a polar liquid in a manufacturing process (e.g., fibers or a fabric produced by a direct spinning method such as a melt blown method, a spun bond method, etc.).

When the above mentioned fine fiber layer and/or the support fiber layer are composed only of constituent fibers, there is preferably a tendency that a charged filter medium having low pressure drop can be provided. However, the fine fiber layer and/or the support fiber layer may contain functional particles, a binder, a pigment and the like in addition to the constituent fibers.

Examples of functional particles include, for example, particles of a radioactive substance adsorbing agent (e.g., zeolite, activated carbon, prussian blue, etc.), an antibacterial agent, an antiviral agent, an antifungal agent, a catalyst (e.g., titanium oxide, manganese dioxide, platinum supported alumina, etc.), a humidity control agent (e.g. silica gel, silica microcapsules, etc.), a deodorant such as activated carbon and carbon black, a pigment, a flame retardant such as a phosphoric acid flame retardant and aluminum hydroxide, a deodorizing agent, an insect repellent, a bactericide, a fragrance, a cation exchange resin, an anion exchange resin, etc.

As described above, the functional particles and the pigment may exist in a form of being supported or adhered to the fine fiber layer and/or the support fiber layer. The functional particles and the pigment also may exist in a form of being kneaded in the fibers constituting the fine fiber layer and/or the support fiber layer.

In the present invention, the state that the fine fiber layer and the support fiber layer are laminated and integrated, does not refer to a state that the fine fiber layer and the support fiber layer are simply superposed. The state includes the state that both layers are bonded and integrated by a binder or an adhesive fiber, or the state that the fibers constituting the fine fiber layer and/or the fibers constituting the support fiber layer are melted and bonded and the both layers are melted and integrated by heat sealing, ultrasonic fusion, or pressing with a heat roll.

When the fine fiber layer and the support fiber layer are laminated and integrated by a binder, the adding amount of the binder can be appropriately selected, and can be 1 g/m$^2$ to 30 g/m$^2$, 2 g/m$^2$ to 20 g/m$^2$, or 3 g/m$^2$ to 15 g/m$^2$.

Since the air permeability between the fine fiber fabric and the support fabric is blocked by an adhesive component such as a binder and the increase of the pressure drop of the charged filter medium can be prevented, it is preferable that the fibers constituting the fine fiber layer and/or the fibers constituting the support fiber layer are melted and bonded and the both layers are melted and integrated.

In particular, since a charged filter medium having a lower pressure drop can be provided, it is preferable that a melted and integrated portion exists on not entire but partial surface of the laminated portion between the two layers, and the melted and integrated portion exists substantially uniformly in the laminated portion, and thereby, the fine fiber layer and the support fiber layer are laminated and integrated. Such laminated and integrated embodiment can be provided by, for example, an ultrasonic pin sonic apparatus.

The charged filter medium of the present invention includes a charged laminate formed by laminating and integrating a fine fiber layer and a support fiber layer. Either the fine fiber layer or the support fiber layer, or both the fine fiber layer and the support fiber layer may be charged. However, it is preferable that both layers are charged (the laminate is charged), because it enables provision of a charged filter medium having excellent filtration performance. The charging embodiment of the charged filter medium can be appropriately selected. However, it is preferable to use a charging embodiment by subjecting to a polar liquid charging method, because it enables provision of a charged filter medium having excellent filtration performance. The reason why the charged filter medium obtained by subjecting to a polar liquid charging method is excellent in filtration performance, has not been completely elucidated. However, it is considered that such charging embodiment is a charging embodiment having high charge amount, because the entire surface of the fiber constituting the charged filter medium is uniformly charged regardless of the inside and outside of the charged filter medium, and the charging embodiment is such that the charge is polarized and present on the surface of respective fibers.

The charged laminate having the above mentioned configuration can be used in a simple substance form as a charge filter medium. However, the charged filter medium may be a charged filter medium comprising another air permeable material such as a pre-filter layer, a back filter layer, a new support base material or the like in a state of simply laminating with the laminate, or a charged filter medium in a state of laminating and integrating with the laminate.

At this time, the embodiment of the air permeable material can be appropriately selected, and for example, a nonwoven fabric, a fabric such as a woven fabric or a knitted fabric, a porous film or the like can be used. Presence or absence of charging of the air permeable material can be appropriately selected, and a charged air permeable material is preferable so that the filtration performance of the finally obtained charged filter medium can be improved.

A pressure drop of the charged filter medium of the present invention at a wind speed of 10 cm/s is 24 Pa or less, and a particle collection efficiency of particles having a particle diameter of 0.3 to 0.5 $\mu$m at a wind speed of 10 cm/s is 76% or more.

The particle collection efficiency of the charged filter medium is preferably 80% or more, preferably 85% or more, preferably 90% or more, or preferably 95% or more. The pressure drop is preferably 20 Pa or less.

The pressure drop and the particle collection efficiency of the charged filter medium can be calculated by the following method. The charged filter medium was set on the upstream side of the measuring apparatus, so that the fiber layer side derived from the support fiber layer in the charged filter medium faced to the measuring apparatus.

(Method of calculating a pressure drop and a particle collection efficiency)

The particle collection efficiency refers to the value calculated by the counting method with a filter set in the test duct. That is, a flat fabric (when the object to be measured has a pleat shape, the bent shape is extended to a flat shape) is set on the holder of the test duct having an effective frontage area of 0.04 m$^2$. After that, when air dust (atmospheric dust number: U) having a particle diameter of 0.3 to 0.5 $\mu$m is supplied to the upstream side of the fabric and air is passed at a surface wind speed of 10 cm/s, the atmospheric dust number (U) of the particles having a particle diameter of 0.3 to 0.5 $\mu$m on the downstream side is measured with a particle counter (RION Co., Ltd.: Model KC-22B). Then, the value calculated from the following formula is defined as the particle collection efficiency (%).

```
Particle collection efficiency (%) = [1- (D / U)] × 100
```

Further, the pressure drop refers to the initial pressure drop (Pa) of the fabric at the time of measuring the particle collection efficiency.

Since a charged filter medium having excellent filtration performance is required, a charged filter medium having a QF value of 0.12 or more which is calculated from the pressure drop and the particle collection efficiency is preferable, a charged filter medium having a QF value of 0.13 or more is preferable, a charged filter medium having a QF value of 0.14 or more is preferable, a charged filter medium having a QF value of 0.15 or more is preferable, and a charged filter medium having a QF value of 0.16 or more is preferable. As the QF value is larger, the charged filter medium is well balanced between a pressure drop and a particle collection efficiency, and is excellent.

The QF value can be calculated by the following method.

(Method of calculating a QF value)

The QF value is calculated by substituting the particle collection efficiency E (%) and the pressure drop $\Delta$P (Pa) of the charged filter medium into the following formula:

```
QF value = [{ - ln (1-E / 100)} / ΔP]
```

wherein "ln" is a natural logarithm.

The charged filter medium of the present invention can be used in a planar shape, but may be in a pleated shape or a wound shape.

In this instance, when the charged filter medium composed only of the fiber layer derived from the fine fiber layer and the fiber layer derived from the support fiber layer are processed into a pleated shape, fold lines are formed like pleat mountains or valleys directly towards the support fiber layer exposed on the surface of the charged filter medium, and the charged filter medium having excellent shape retention and intended pleat shape can be preferably provided. In particular, when the support fiber layer is a fiber layer derived from a spunbond, the above effects preferably tend to be effectively exhibited.

The shape of the pleat mountain can be appropriately selected, and the height of the pleat mountain can be 3 mm to 100 mm, 5 mm to 80 mm, or 10 mm to 60 mm. Further, the distance between the peaks of the pleat mountains can be 1 mm to 25 mm, 2 mm to 20 mm, or 3 mm to 15 mm.

The shape of the charged filter medium can be appropriately selected. The charged filter medium may be, for example, the charged filter medium molded into a specific shape such as a cup shape, the charged filter medium cut according to the shape of the filter frame to be stored, or the charge filter medium in a pleated shape provided with an edge band around it.

The charged filter medium prepared as described above, and the filter unit composed of the filter frame and the edge band are preferably configured and used in a state in which the support fiber layer of the charged filter medium is exposed to the filtration object side. By the filter unit in such state, coarse particles in the filtration object can be trapped by the support fiber layer, and fine particles that cannot be trapped by the support fiber layer are selectively trapped by the fine fiber layer. As a result, a filter unit having a long filtration life in which an increase of the pressure drop due to clogging of the charged filter medium is suppressed, can be realized.

Next, a method of producing a charged filter medium of the present invention is explained.

The production method mainly comprises:

(1) a step of preparing a fine fiber fabric in which a median fiber diameter of constituent fibers is less than 2.5 $\mu$m and a basis weight is less than 13 g/m$^2$,
(2) a step of preparing a support fabric,
(3) a step of laminating and integrating the fine fiber fabric and the support fabric to prepare a laminate, and
(4) a step of adding a polar liquid to the laminate, applying a force to the laminate via the polar liquid, and then removing the polar liquid from the laminate, in order to charge the laminate.

First, the step explained is (1) a step of preparing a fine fiber fabric in which a median fiber diameter of constituent fibers is less than 2.5 $\mu$m and a basis weight is less than 13 g/m$^2$.

In the case that the fine fiber fabric in which a median fiber diameter of constituent fibers is less than 2.5 $\mu$m and a basis weight is less than 13 g/m$^2$ is a woven fabric or a knit fabric, the fine fiber fabric can be prepared by weaving or knitting the fibers.

In the case that the fine fiber fabric is a nonwoven fabric, as a method of preparing the nonwoven fabric, various fiber manufacturing methods exemplified as being capable of preparing constituent fibers in a fine fiber layer can be used. Moreover, a fine fiber fabric can be prepared by preparing a fiber web by subjecting the prepared fibers to, for example, a dry method or a wet method, and intertwining and/or integrating constituent fibers in the prepared fiber web.

Alternatively, a fiber web or a nonwoven fabric may be prepared by spinning using a direct spinning method and collecting fibers. Further, it is preferable to prepare a fine fiber fabric using a direct spinning method, because even though a fiber diameter is small and a basis weight is small, a fine fiber fabric capable of improving the filtration performance of the charged filter medium can be prepared by making the fibers be uniformly dispersed. In addition, it is preferable to use a melt blown method or a spun bond method, because a laminate can be prepared with reduction of the number of steps and prevention of elution of residues to a polar liquid.

Examples of a method of intertwining and/or integrating the fibers constituting the fiber web, include a method of intertwining with a needle or a water flow, a method of bonding and integrating or melting and integrating the fibers to each other with a binder or an adhesive fiber by subjecting the fiber web to a heat treatment, etc.

Fabrics such as nonwoven fabrics other than fiber webs may be subjected to a heat treatment. The method of a heat treatment may be appropriately selected. For example, a method of heating and pressurizing with a calender roll, a method of heating with a hot air dryer, a method of melting a thermoplastic resin contained in the fiber by irradiation of infrared rays under no pressure may be used.

Next, the step explained is (2) a step of preparing a support fabric.

A method of preparing a support fabric may be appropriately selected. As the method, a method of preparing various fibers exemplified as being capable of preparing constituent fibers in a fine fiber layer, or the above mentioned method exemplified for the step (1), can be used.

When the later described laminate is subjected to a polar liquid charging method, the fine fiber layer can be prevented from cracks or great deformation of the fine fiber layer, because the support fiber layer has excellent rigidity and can support the fine fiber layer more firmly. As a result, a charged filter medium having excellent filtration performance can be preferably provided. Therefore, it is preferable to prepare a support fabric by using a direct spinning method (particularly, a spunbond method).

Then, the step explained is (3) a step of laminating and integrating the fine fiber fabric and the support fabric to prepare a laminate.

As a method of preparing a laminate by laminating and integrating the fine fiber fabric and the support fabric, the method as explained in the section regarding the embodiment of laminating and integrating the fine fiber layer and the support fiber layer, can be adopted.

As a specific example, a method of preparing a laminate, comprising heating the adhesive component to its glass transition temperature or its melting point or higher, and melting and integrating between the two layers, by supplying a simply laminated thin fiber fabric and a supporting fabric to a heating apparatus such as an oven dryer, a far infrared heater or a dry heat dryer, or by supplying the adhesive component (binder particles, spider web-like adhesive fiber web, etc.) intervened between the fine fiber fabric and the supporting fabric to the heater, can be adopted.

Moreover, it is preferable to adopt a method of preparing a laminate, comprising melting and bonding the constituent fibers in the fine fiber fabric and/or the constituent fibers in the support fabric and melting and integrating between the two layers, for example, by supplying the two layers to a heat seal apparatus or an ultrasonic fusion apparatus, or by pressing a heat roll to the two layers, because there is a tendency that decrease of air permeability resistance of the interlayer part of the thin fiber layer and the support fiber layer, can be prevented.

In particular, by supplying to an ultrasonic pinsonic apparatus, a melted and integrated portion exists on not entire but partial surface of the laminated portion between the two layers, and the melted and integrated portion exists substantially uniformly in the laminated portion, and thereby a charged filter medium having lower pressure drop can be provided.

Finally, the step explained is (4) a step of adding a polar liquid to the laminate, applying a force to the laminate via the polar liquid, and then removing the polar liquid from the laminate, to charge the laminate.

A type of a polar liquid to be used can be appropriately selected so that the charged filter medium of the present invention can be provided. For example, a polar liquid such as pure water (e.g., secondary distilled water subjected to distillation and ion exchange) can be used alone or as a mixture. A temperature of the polar liquid applied to the laminate can be appropriately selected, and the temperature can be in the range of $20 \pm 5$ °C.

In addition, when an electrical conductivity of the polar liquid used is 5 $\mu$S/cm (microsiemens per centimeter) or less, the charge amount of the laminate can be effectively improved by using a polar liquid charging method according to the present invention, and a charged filter medium satisfying the pressure drop and the particle collection efficiency defined by the present invention, can be realized.

A method of adding a polar liquid to the laminate can be appropriately selected. For example, a method of spraying the polar liquid on the laminate, a method of adding a droplet of the polar liquid, a method of immersing the laminate in the polar liquid, a method of processing so that the polar liquid passes through the laminate, or the like, can be adopted.

In a method of applying a force to the laminate via the polar liquid, the force may be applied by adding the polar liquid to the above described laminate. For example, a method of applying ultrasonic waves to the laminate to which a polar liquid is added, a method of applying vibration to the laminate to which a polar liquid is added, a method of applying a force to the laminate by sucking or blowing off and removing the polar liquid from the laminate to which a polar liquid is added, or the like, can be adopted.

A method of removing the polar liquid from the laminate may be a method of removing the polar liquid by sucking or blowing off the polar liquid from the laminate to which the polar liquid is added. Alternatively, for example, a method of heating and removing the polar liquid from the laminate by supplying the laminate to a heater, a method of removing the polar liquid from the laminate by applying a wind power or ultrasonic waves, a method of evaporating and removing the polar liquid from the laminate by leaving the laminate in a room temperature environment or a reduced pressure environment, or the like, can be adopted.

A charged laminate can be produced by the production method described above. The charged laminate as it is, may be used as a charged filter medium. Alternatively, a charged filter medium may be produced by applying various secondary steps such as a step of adding further another air permeable material in addition to the charged laminate, a step of adding functional particles, a binder, a pigment, or the like to the charged laminate, a step of processing the charged laminate into a pleated shape or a wound shape, a step of molding the charged laminate into a specific shape such as a cup shape, a step of cutting the charged laminate according to the shape of the filter frame to be stored, a step of providing an edge band around the periphery of the charged filter medium in a pleated shape, and the like.

EXAMPLE

Hereinafter, the present invention is explained specifically with reference to examples, but the present invention is not limited only to these examples.

(Example 1)

(Method of preparing a fine fiber fabric)

A melt blown nonwoven fabric having the following configurations, was prepared by mixing 100 parts by mass of a commercially available polypropylene resin having a volume resistivity value of about $10^{16}$ $\Omega \cdot$cm, and 4 parts by mass of a commercially available hindered amine light stabilizer as a charging aid, followed by spinning the mixture using the melt blown method.

    Resin constituting the fiber: a polypropylene resin
    Cross sectional shape of fiber: circular
    Median fiber diameter: 1.44 $\mu$m
    Basis weight: 7 g/m$^2$
    Thickness: 0.07 mm
    Pressure drop at a wind speed of 10 cm/s: 12.5 Pa

The pressure drop (Pa) of the melt blown nonwoven fabric was determined by subjecting the melt blown nonwoven fabric to the calculation method described in the section "Method of calculating a pressure drop and a particle collection efficiency".

(Method of preparing a support fabric)

A spunbonded nonwoven fabric having the following configurations was prepared.

    Resin constituting the fiber: a polyethylene terephthalate resin
    Cross sectional shape of fiber: irregular cross sectional shape with multiple Y-shaped protrusions protruding from the center
    Fineness: 16 dtex
    Basis weight: 60 g/m$^2$
    Thickness: 0.42 mm
    Pressure drop at a wind speed of 10 cm/s: 1.5 Pa

The pressure drop (Pa) of the spunbond nonwoven fabric was determined by subjecting the spunbond nonwoven fabric to the calculation method described in the section "Method of calculating a pressure drop and a particle collection efficiency".

(Method of preparing a laminate)

The main surface of the spunbond nonwoven fabric and the main surface of the melt blown nonwoven fabric were brought into contact, and were applied to the ultrasonic pin sonic apparatus (horn pressure: 1.8 to 2.1 kgf/cm$^2$) in a simply superposed state.
Ultrasonic waves were applied to a part of the main surface of the melt blown nonwoven fabric and the spunbonded nonwoven fabric in a simply superposed state, and the polypropylene fibers constituting the melt blown nonwoven fabric were melted, and were melted and bonded with the spunbonded nonwoven fabric, and then, a laminate formed by laminating and integrating the spunbond nonwoven fabric and the melt blown nonwoven fabric was prepared. The area of the melted and bonded portion was 1.5% of the area of the main surface, and the melted and bonded portion was substantially uniformly dispersed on the main surface.
The melt blown nonwoven fabric simple substance and the laminate (collectively referred to as fabric in this paragraph) prepared as described above were subjected to the following confirmation method and measurement method, to confirm presence or absence of cracks in the fabric, and to measure the elongation rate.

(Method of confirming presence or absence of cracks)

The fabric was subjected to "Method of preparing a charged laminate" described later. Presence or absence of cracks was confirmed by visually observing the main surface of the fabric after being subjected to "Method of preparing a charged laminate".

(Method of measuring elongation rate of fabric)

Length (A0) in one direction on the main surface and length (B0) in the direction perpendicular to the one direction on the main surface of the fabric before being subjected to "Method of preparing a charged laminate" described later, were measured. And the length (A1) of the one direction on the main surface in the fabric and the length (B1) of the direction perpendicular to the one direction on the main surface of the fabric after being subjected to "Method of preparing a charged laminate", were measured again.

The elongation rate (%) of the fabric was calculated by substituting the measured values of A0, A1, B0 and B1 into the following formula.

When the value of the elongation rate (%) is 0%, it means that the fabric is not deformed before and after being subjected to "Method of preparing a charged laminate". In addition, when the value of the elongation rate (%) is much larger than 0%, it means that the fabric is more largely elongated by being subjected to "Method of preparing a charged laminate" and the fabric is greatly deformed.

$$\text{Elongation rate (\%)} = \{100 \times (A1-A0) / A0 + 100 \times (B1-B0) / B0\} / 2$$

A melt blown nonwoven fabric having an elongation rate (%) exceeding 3% was greatly deformed. Therefore, the charged filter medium could not be prepared even if it was subjected to the method of producing a charged filter medium disclosed in Patent Literature 2 or Patent Literature 3.

(Method of preparing a charged laminate)

The laminate was delivered to a bath retaining pure water (e.g., secondary distilled water subjected to distillation and ion exchange) having an electric conductivity of 3.2 μS/cm and a temperature of 20 ± 5 °C as a polar liquid. A force was applied to the laminate via the pure water, by making pure water be carried and applying ultrasonic waves of a frequency of 20 kHz to the laminate.

Next, the laminate subjected to ultrasonic waves was applied to a conveyor dryer and dried at 80 °C to remove pure water contained in the laminate, and thereby a charged laminate was prepared.

A particle collection efficiency (%), pressure drop (Pa) and QF value of the charged filter medium were measured and calculated, using the above prepared charged laminate as it was, as the charged filter medium.

In addition, the prepared charged filter medium had a configuration that a fine fiber layer derived from the melt blown nonwoven fabric and a support fiber layer derived from the spunbond nonwoven fabric were laminated and integrated.

(Examples 2 to 6, Comparative Examples 1 to 6)

Charged filter mediums were prepared in the same manner as in Example 1 except that the basis weight and the median fiber diameter of the melt blown nonwoven fabric used for the preparation of the charged filter mediums were changed.

In addition, each of the prepared charged filter mediums had a configuration that a fine fiber layer derived from the melt blown nonwoven fabric and a support fiber layer derived from the spunbond nonwoven fabric were laminated and integrated.

The configuration and measurement results of the charged filter mediums of above prepared Examples and Comparative Examples are summarized in Table 1 to Table 4.

In addition, when there were cracks on the main surface of the melt blown nonwoven fabric simple substance or the charged filter medium (charged laminate), the length on the main surface of the fabric could not be measured, and the elongation rate (%) could be calculated. For the fabric for which the elongation rate (%) could not be calculated, mark "-" was described in the table.

[Table 1]

| | Melt blown nonwoven fabric, simple substance | | | | | | Spunbonded nonwoven fabric, simple substance | | |
|---|---|---|---|---|---|---|---|---|---|
| | Basis weight [g/m$^2$] | Median fiber diameter [μm] | Average fiber diameter [μm] | Pressure drop [Pa] | Crack | Elongation rate [%] | Basis weight [g/m$^2$] | Fineness [dtex] | Pressure drop [Pa] |
| Example 1 | 7 | 1.44 | 1.76 | 12.5 | Yes | - | 60 | 16 | 1.5 |
| Example 2 | 7 | 1.7 | 2.05 | 12.5 | No | 16 | 60 | 16 | 1.5 |
| Example 3 | 10 | 1.7 | 2.05 | 17 | No | 8 | 60 | 16 | 1.5 |
| Example 4 | 10 | 2.1 | 2.5 | 12.5 | No | 6 | 60 | 16 | 1.5 |
| Comparative Example 1 | 13 | 2.5 | 2.9 | 12.5 | No | 3 | 60 | 16 | 1.5 |
| Comparative Example 2 | 18 | 3.0 | 3.5 | 12.5 | No | 3 | 60 | 16 | 1.5 |
| Comparative Example 3 | 25 | 3.8 | 4.3 | 12.5 | No | 3 | 60 | 16 | 1.5 |

[Table 2]

| | Fine fiber layer (derived from melt blown nonwoven fabric) | | | Support fiber layers (derived from spunbonded nonwoven fabric) | | Laminate | | Charged filter medium | | |
|---|---|---|---|---|---|---|---|---|---|---|
| | Basis weight [g/m²] | Median fiber diameter [μm] | Average fiber diameter [μm] | Basis weight [g/m²] | Fineness [dtex] | Crack | Elongation rate [%] | Particle collection efficency [%] | Pressure drop [Pa] | QF value |
| Example 1 | 7 | 1.44 | 1.76 | 60 | 16 | No | 0 | 96.2 | 18 | 0.182 |
| Example 2 | 7 | 1.7 | 2.05 | 60 | 16 | No | 0 | 95 | 18 | 0.166 |
| Example 3 | 10 | 1.7 | 2.05 | 60 | 16 | No | 0 | 97 | 24 | 0.146 |
| Example 4 | 10 | 2.1 | 2.5 | 60 | 16 | No | 0 | 92 | 18 | 0.140 |
| Comparative Example 1 | 13 | 2.5 | 2.9 | 60 | 16 | No | 0 | 89 | 18 | 0.123 |
| Comparative Example 2 | 18 | 3.0 | 3.5 | 60 | 16 | No | 0 | 84 | 18 | 0.102 |
| Comparative Example 3 | 25 | 3.8 | 4.3 | 60 | 16 | No | 0 | 80 | 18 | 0.089 |

[Table 3]

| | Melt blown nonwoven fabric, simple substance | | | | | | Spunbonded nonwoven fabric, simple substance | | |
|---|---|---|---|---|---|---|---|---|---|
| | Basis weight [g/m²] | Median fiber diameter [μm] | Average fiber diameter [μm] | Pressure drop [Pa] | Crack | Elongation rate [%] | Basis weight [g/m²] | Fineness [dtex] | Pressure drop [Pa] |
| Example 5 | 3 | 1.7 | 2.05 | 5.5 | Yes | - | 60 | 16 | 1.5 |
| Example 6 | 5 | 1.7 | 2.05 | 9 | Yes | - | 60 | 16 | 1.5 |
| Example 2 | 7 | 1.7 | 2.05 | 12.5 | No | 16 | 60 | 16 | 1.5 |
| Example 3 | 10 | 1.7 | 2.05 | 17 | No | 8 | 60 | 16 | 1.5 |
| Comparative Example 4 | 13 | 1.7 | 2.05 | 22 | No | 3 | 60 | 16 | 1.5 |
| Comparative Example 5 | 18 | 1.7 | 2.05 | 32 | No | 3 | 60 | 16 | 1.5 |
| Comparative Example 6 | 25 | 1.7 | 2.05 | 45 | No | 3 | 60 | 16 | 1.5 |

[Table 4]

| | Fine fiber layer (derived from melt blown nonwoven fabric) | | | Support fiber layers (derived from spunbonded nonwoven fabric) | | Laminate | | Charged filter medium | | |
|---|---|---|---|---|---|---|---|---|---|---|
| | Basis weight [g/m$^2$] | Median fiber diameter [μm] | Average fiber diameter [μm] | Basis weight [g/m$^2$] | Fineness [dtex] | Crack | Elongation rate [%] | Particle collection efficency [%] | Pressure drop [Pa] | QF value |
| Example 5 | 3 | 1.7 | 2.05 | 60 | 16 | No | 0 | 76 | 9 | 0.159 |
| Example 6 | 5 | 1.7 | 2.05 | 60 | 16 | No | 0 | 88 | 13 | 0.163 |
| Example 2 | 7 | 1.7 | 2.05 | 60 | 16 | No | 0 | 95 | 18 | 0.166 |
| Example 3 | 10 | 1.7 | 2.05 | 60 | 16 | No | 0 | 97 | 24 | 0.146 |
| Comparative Example 4 | 13 | 1.7 | 2.05 | 60 | 16 | No | 0 | 98.8 | 30 | 0.147 |
| Comparative Example 5 | 18 | 1.7 | 2.05 | 60 | 16 | No | 0 | 99.7 | 43 | 0.135 |
| Comparative Example 6 | 25 | 1.7 | 2.05 | 60 | 16 | No | 0 | 99.95 | 62 | 0.123 |

(Example 7)

A charged filter medium was prepared in the same manner as in Example 2 except that a melt blown nonwoven fabric was prepared using only a polypropylene resin without mixing a charging aid.

In addition, the prepared charged filter medium had a configuration that a fine fiber layer derived from the melt blown nonwoven fabric and a support fiber layer derived from the spunbond nonwoven fabric were laminated and integrated.

(Comparative Example 7)

A charged laminate was prepared by subjecting the laminate prepared in Example 2 to a corona discharge treatment (direct current voltage: 15 kV), instead of subjecting to a charging method described in the above section "Method of preparing a charged laminate".

The prepared charged laminate as it was, was used as a charged filter medium.

In addition, the prepared charged filter medium had a configuration that a fine fiber layer derived from the melt blown nonwoven fabric and a support fiber layer derived from the spunbond nonwoven fabric were laminated and integrated.

(Comparative Example 8)

A charged filter medium was prepared in the same manner as in Comparative Example 7, except that the basis weight and the median fiber diameter of the melt blown nonwoven fabric used to prepare the charged filter medium were changed.

In addition, each of the prepared charged filter mediums had a configuration that a fine fiber layer derived from the melt blown nonwoven fabric and a support fiber layer derived from the spunbond nonwoven fabric were laminated and integrated.

The configuration and measurement results of the charged filter mediums of above prepared Examples and Comparative Examples are summarized in Table 5 and Table 6.

[Table 5]

| | Melt blown nonwoven fabric, simple substance | | | | | | Spunbonded nonwoven fabric, simple substance | | |
|---|---|---|---|---|---|---|---|---|---|
| | Basis weight [g/m$^2$] | Median fiber diameter [$\mu$m] | Average fiber diameter [$\mu$m] | Pressure drop [Pa] | Crack | Elongation rate [%] | Basis weight [g/m$^2$] | Fineness [dtex] | Pressure drop [Pa] |
| Example 2 | 7 | 1.7 | 2.05 | 12.5 | No | 16 | 60 | 16 | 1.5 |
| Example 7 | 7 | 1.7 | 2.05 | 12.5 | No | 16 | 60 | 16 | 1.5 |
| Comparative Example 7 | 7 | 1.7 | 2.05 | 12.5 | No | 16 | 60 | 16 | 1.5 |
| Comparative Example 8 | 25 | 3.8 | 4.3 | 12.5 | No | 3 | 60 | 16 | 1.5 |

[Table 6]

| | Fine fiber layer (derived from melt blown nonwoven fabric) | | | Support fiber layers (derived from spunbonded nonwoven fabric) | | Laminate | | Charged filter medium | | |
|---|---|---|---|---|---|---|---|---|---|---|
| | Basis weight [g/m²] | Median fiber diameter [μm] | Average fiber diameter [μm] | Basis weight [g/m²] | Fineness [dtex] | Crack | Elongation rate [%] | Particle collection efficency [%] | Pressure drop [Pa] | QF value |
| Example 2 | 7 | 1.7 | 2.05 | 60 | 16 | No | 0 | 95 | 18 | 0.166 |
| Example 7 | 7 | 1.7 | 2.05 | 60 | 16 | No | 0 | 91 | 18 | 0.134 |
| Comparative Example 7 | 7 | 1.7 | 2.05 | 60 | 16 | No | 0 | 75 | 18 | 0.077 |
| Comparative Example 8 | 25 | 3.8 | 4.3 | 60 | 16 | No | 0 | 70 | 18 | 0.067 |

(Examples 8 to 10)

Charged filter mediums were prepared in the same manner as in Example 1 except that the basis weight and the median fiber diameter of the melt blown nonwoven fabric were changed.

In addition, each of the prepared charged filter mediums had a configuration that a fine fiber layer derived from the melt blown nonwoven fabric and a support fiber layer derived from the spunbond nonwoven fabric were laminated and integrated.

The configuration and measurement results of the charged filter mediums of above prepared Examples are summarized in Table 7 and Table 8.

[Table 7]

| | Melt blown nonwoven fabric, simple substance | | | | | | Spunbonded nonwoven fabric, simple substance | | |
|---|---|---|---|---|---|---|---|---|---|
| | Basis weight [g/m²] | Median fiber diameter [μm] | Average fiber diameter [μm] | Pressure drop [Pa] | Crack | Elongation rate [%] | Basis weight [g/m²] | Fineness [dtex] | Pressure drop [Pa] |
| Example 8 | 2 | 1.0 | 1.2 | 17 | Yes | - | 60 | 16 | 1.5 |
| Example 9 | 4 | 1.2 | 1.45 | 17 | Yes | - | 60 | 16 | 1.5 |
| Example 10 | 6 | 1.4 | 1.7 | 17 | Yes | - | 60 | 16 | 1.5 |
| Example 1 | 7 | 1.44 | 1.76 | 12.5 | Yes | - | 60 | 16 | 1.5 |

[Table 8]

| | Fine fiber layer (derived from melt blown nonwoven fabric) | | | Support fiber layers (derived from spunbonded nonwoven fabric) | | Laminate | | Charged filter medium | | |
|---|---|---|---|---|---|---|---|---|---|---|
| | Basis weight [g/m$^2$] | Median fiber diameter [$\mu$m] | Average fiber diameter [$\mu$m] | Basis weight [g/m$^2$] | Fineness [dtex] | Crack | Elongation rate [%] | Particle collection efficency [%] | Pressure drop [Pa] | QF value |
| Example 8 | 2 | 1.0 | 1.2 | 60 | 16 | No | 0 | 97.4 | 24 | 0.152 |
| Example 9 | 4 | 1.2 | 1.45 | 60 | 16 | No | 0 | 97.5 | 24 | 0.154 |
| Example 10 | 6 | 1.4 | 1.7 | 60 | 16 | No | 0 | 96.5 | 19 | 0.176 |
| Example 1 | 7 | 1.44 | 1.76 | 60 | 16 | No | 0 | 96.2 | 18 | 0.182 |

The followings were found from the results of Table 1 to Table 8.

When a melt blown nonwoven fabric having a median fiber diameter of 2.5 μm or more and/or a basis weight of 13 g/m$^2$ or more in a simple substance form, was subjected to the charging step according to the present invention, no cracks occurred on the main surface thereof, and no major deformation occurred in the melt blown nonwoven fabric. On the other hand, when a melt blown nonwoven fabric having a median fiber diameter less than 2.5 μm and a basis weight less than 13 g/m$^2$ in a simple substance form, was subjected to the charging step according to the present invention, cracks were generated on the main surface thereof, or large deformation occurred in the melt blown nonwoven fabric. Therefore, as long as the method of producing a charged filter medium disclosed in Patent Literature 2 or Patent Literature 3 was adopted, a charged filter medium including a fine fiber layer derived from the melt blown nonwoven fabric could not be provided.

From the above, based on the background art, a charged filter medium having excellent filtration performance, which satisfies the configuration of the fine fiber layer defined by the present invention (a median fiber diameter is less than 2.5 μm, and a basis weight is less than 13 g/m$^2$), and the filtration performance defined by the present invention (a pressure drop is 24 Pa or less, and a particle collection efficiency is 76% or more) could not be provided.

On the other hand, the charged filter medium of Examples was a charged filter medium having excellent filtration performance that satisfies the configuration of the fine fiber layer defined by the present invention (a median fiber diameter is less than 2.5 μm, and a basis weight is less than 13 g/m$^2$), and the filtration performance defined by the invention (a pressure drop is 24 Pa or less, and a particle collection efficiency is 76% or more).

The followings were found from the results of Tables 3 and 4.

It has been found that, in charged filter mediums having a fine fiber layer having the same median fiber diameter, there is a range of a basis weight of the fine fiber layer that can specifically increase the QF value of the charged filter medium. It was found that concerely in the results of Tables 3 and 4, the QF value increased specifically in the range of the basis weight of 3 g/m$^2$ or more and less than 10 g/m$^2$ (particularly, in the range of the basis weight of 3 g/m$^2$ to 7 g/m$^2$, further in the range of the basis weight of 5 g/m$^2$ to 7 g/m$^2$) ..

That is, the present inventors have found a new finding that the filtration performance of the charged filter medium does not have a simple proportional relationship with the basis weight, and there is a range of the basis weight in which the filtration performance can be specifically improved.

For this reason, the charged filter medium of the present invention, having the above described specifically improving range of the basis weight was a charged filter medium having more excellent filtration performance.

Furthermore, the followings were found from the results of Tables 5 and 6.

From the result of comparison between Example 2 and Example 7, the charged filter medium provided with the fine fiber layer containing the charging aid was excellent in a particle collection efficiency, and thus was a charged filter medium having more excellent filtration performance.

From the result of comparison between Example 2 and Comparative Examples 7 and 8, the charged filter medium obtained by subjecting to a polar liquid charging method satisfied the particle collection efficiency and the pressure drop defined by the present invention, but the charged filter medium obtained by subjecting to a corona charging method did not satisfy the particle collection efficiency and the pressure drop defined by the present invention. In addition, as a notable point, the charged filter medium of Example 2 was a charged filter medium having excellent filtration performance and a twice or more higher QF value than the charged filter mediums of Comparative Examples 7 and 8 obtained by subjecting to a corona charging method.

Therefore, the charged filter medium of the present invention obtained by subjecting to a polar liquid charging method was a charged filter medium having more excellent filtration performance.

Moreover, by the production method of the present invention, the charged filter mediums of Examples which satisfy the requirements of the present invention could be prepared, as described above. This is because the production method of the present invention includes a step of subjecting the laminate formed by laminating and integrating a fine fiber fabric and a support fiber fabric to a polar liquid charging method.

That is, it is because the fine fiber fabric can be subjected to a polar liquid charging method in a state of being reinforced by the support fiber fabric, and the charged filter medium can be prepared by preventing the fine fiber fabric from cracks or large deformation.

When the charged filter mediums prepared in Examples were processed into a pleated shape, charged filter mediums having excellent shape retention and the intended pleated shape could be provided. And a filter unit composed of a filter frame and an edge band could be provided by using the charging filter medium having the pleat shape. When used in an embodiment in which the support fiber layer derived from the melt blown nonwoven fabric in the charged filter medium processed into a pleated shape is exposed on the filtration object side, the above prepared filter unit was a filter unit having a long filtration life in which in particular, an increase of the pressure drop due to clogging of the charged filter medium was suppressed.

Further, the followings were found from the results of Reference Examples 1 to 3 described below.

(Reference Example 1)

The laminate used in Example 1 was prepared. The laminate was subjected to the above described "Method of calculating a pressure drop and a particle collection efficiency" and measured, and the particle collection efficiency was 16.1%, the pressure drop was 17.8 Pa, and the QF value was 0.010.

The laminate was immersed in a bath retaining pure water (e.g., secondary distilled water subjected to distillation and ion exchange, an electric conductivity: 1.0 $\mu$S/cm) maintained at a temperature of 20 $\pm$ 5 °C as a polar liquid. A force was applied to the laminate via the polar liquid, by making the polar liquid be carried and applying a pressure roll to the laminate.

Next, the laminate was dried at 50 °C to remove pure water contained in the laminate, and thereby a charged laminate was prepared.

The charged laminate prepared above was subjected to the above described "Method of calculating a pressure drop and a particle collection efficiency", and measured, and the particle collection efficiency was 52.2%, the pressure drop was 20.7 Pa, and the QF value was 0.036.

(Reference Example 2)

A charged laminate was prepared in the same manner as in Reference Example 1 except for using as a polar liquid, a mixed liquid (an electric conductivity: 7.3 $\mu$S/cm) maintained at a temperature of 20 $\pm$ 5 °C obtained by mixing 100 % by mass of pure water (e.g., secondary distilled water subjected to distillation and ion exchange, an electric conductivity: 1.0 $\mu$S/cm) maintained at a temperature of 20 $\pm$ 5 °C with 4% by mass of a surfactant (main component: C9-11 alcohol ethoxylate (CAS Registry Number: 68439-46-3)).

The charged laminate prepared above was subjected to the above described "Method of calculating a pressure drop and a particle collection efficiency", and measured, and the particle collection efficiency was 9.6%, the pressure drop was 30.5 Pa, and the QF value was 0.003.

(Reference Example 3)

A charged laminate was prepared in the same manner as in Reference Example 1 except for using as a polar liquid, a mixed liquid (an electric conductivity: 3.2 $\mu$S/cm) maintained at a temperature of 20 $\pm$ 5 °C obtained by mixing 100 % by mass of pure water (e.g., secondary distilled water subjected to distillation and ion exchange, an electric conductivity: 1.0 $\mu$S/cm) maintained at a temperature of 20 $\pm$ 5 °C with 1.5% by mass of a surfactant (main component: C9-11 alcohol ethoxylate (CAS Registry Number: 68439-46-3)).

The charged laminate prepared above was subjected to the above described "Method of calculating a pressure drop and a particle collection efficiency", and measured, and the particle collection efficiency was 24.0%, the pressure drop was 24.5 Pa, and the QF value was 0.011.

As a result of comparison of the respective charged laminates prepared in Reference Examples 1 to 3, the charged laminate prepared using the polar liquid having a high electric conductivity (e.g., a polar liquid having an electric conductivity higher than 5 $\mu$S/cm), has significantly reduced particle collection efficiency and significantly increased pressure drop, compared to the charged laminate prepared using the polar liquid having a low electrical conductivity (e.g., a polar liquid having an electrical conductivity of 5 $\mu$S/cm or less). Therefore, it has been found that a charged filter medium satisfying the pressure drop and the particle collection efficiency defined by the present invention is difficult to be realized, when a polar liquid having a high electrical conductivity (e.g., a polar liquid having an electrical conductivity higher than 5 $\mu$S/cm) is used.

Furthermore, as a result of comparison of the respective charged laminates prepared in Reference Examples 1 to 3, the charged laminate prepared using the polar liquid contaminated with residues, has significantly reduced particle collection efficiency and significantly increased pressure drop, compared to the charged laminate prepared using only pure water as a polar liquid. From this, it has been found that a charged filter medium satisfying the pressure drop and the particle collection efficiency defined by the present invention is difficult to be realized, when using a polar liquid contaminated with residues. For this reason, even when a laminate containing, for example, a dry nonwoven fabric or a wet nonwoven fabric, in which an oil, a dispersant, a surfactant, or the like is added in the manufacturing process, is supplied to a polar liquid to prepare a charged filter medium, it is considered difficult to realize a charged filter medium satisfying the pressure drop and the particle collection efficiency defined by the present invention, because the polar liquid to be used is contaminated by residues (an oil, a dispersant, a surfactant, etc.) eluted from the laminate.

Based on the above results, the followings were considered as one reason why the charged filter medium of Examples satisfied the pressure drop and the particle collection efficiency defined by the present invention.

It was considered that the charged filter medium satisfying the pressure drop and the particle collection efficiency defined by the present invention could be realized in Examples, because the laminates used in Examples are composed only of a fine fiber layer and a support fiber layer consisting of fibers or fabric (e.g., fibers or fabric prepared by using a direct spinning method such as a melt blown method or a spunbond method) which was manufactured without adding an oil, a dispersant or a surfactant that can be residues that may be eluted to a polar liquid in the manufacturing process. Furthermore, it was considered that the charged filter medium satisfying the pressure drop and the particle collection efficiency defined by the present invention could be realized in Examples, because of subjecting the laminates used in Examples to a polar liquid charging method using the polar liquid having a low electrical conductivity (e.g., a polar liquid of an electrical conductivity of 5 $\mu$S/cm or less).

INDUSTRIAL APPLICABILITY

A charged filter medium of the present invention can be suitably used as a gas filter or a liquid filter, for example, for a use in factories manufacturing foods or medical products, a use in factories manufacturing precision instruments, a use in indoor cultivation facilities of agricultural crops, a use for ordinary houses, a use in industrial facilities such as office buildings, a use for air cleaners, a use for electrical appliances such as OA equipment and a use for various vehicles such as automobiles and airplanes.

Moreover, a method of producing a charged filter medium of the present invention enables production of a charged filter medium which can be suitably used for the various uses mentioned above.

**Claims**

1. A charged filter medium comprising a charged laminate formed by laminating and integrating a fine fiber layer in which a median fiber diameter of constituent fibers is less than 2.5 $\mu$m and a basis weight is less than 13 g/m$^2$; and a support fiber layer,
   wherein a pressure drop of the charged filter medium at a wind speed of 10 cm/s is 24 Pa or less; and
   a particle collection efficiency of particles having a particle diameter of 0.3 to 0.5 $\mu$m at a wind speed of 10 cm/s is 76% or more.

2. A method of producing a charged filter medium comprising a charged laminate, the method comprising:

   a step of preparing a fine fiber fabric in which a median fiber diameter of constituent fibers is less than 2.5 $\mu$m and a basis weight is less than 13 g/m$^2$,
   a step of preparing a support fabric,
   a step of laminating and integrating the fine fiber fabric and the support fabric to prepare a laminate, and
   a step of adding a polar liquid to the laminate, applying a force to the laminate via the polar liquid, and then removing the polar liquid from the laminate, to charge the laminate.

## INTERNATIONAL SEARCH REPORT

| International application No. |
|---|
| PCT/JP2018/011460 |

A. CLASSIFICATION OF SUBJECT MATTER
Int.Cl. B01D39/16(2006.01)i, B03C3/28(2006.01)i, B32B5/02(2006.01)i,
D04H1/4382(2012.01)i, D04H3/016(2012.01)i
According to International Patent Classification (IPC) or to both national classification and IPC

B. FIELDS SEARCHED

Minimum documentation searched (classification system followed by classification symbols)
Int.Cl. B01D39/16, B03C3/28, B32B5/02, D04H1/4382, D04H3/016

| Documentation searched other than minimum documentation to the extent that such documents are included in the fields searched | |
|---|---|
| Published examined utility model applications of Japan | 1922-1996 |
| Published unexamined utility model applications of Japan | 1971-2018 |
| Registered utility model specifications of Japan | 1996-2018 |
| Published registered utility model applications of Japan | 1994-2018 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | WO 2017/018317 A1 (KURARAY CO., LTD.) 02 February 2017, | 1 |
| A | claims, paragraphs [0005], [0026], [0045]-[0065], [0085], [0087]-[0092], [0101] & TW 201710065 A | 2 |
| Y | JP 2010-534559 A (3M INNOVATIVE PROPERTIES CO.) 11 November | 1 |
| A | 2010, claims, paragraphs [0035]-[0055] & WO 2009/014539 A1, claims, paragraphs [0045]-[0065] & EP 2180932 A1 & AU 2007356885 A1 | 2 |

☒ Further documents are listed in the continuation of Box C.  ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 29 May 2018 (29.05.2018) | 12 June 2018 (12.06.2018) |

| Name and mailing address of the ISA/ | Authorized officer |
|---|---|
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

**INTERNATIONAL SEARCH REPORT**

| International application No. |
| --- |
| PCT/JP2018/011460 |

C (Continuation).    DOCUMENTS CONSIDERED TO BE RELEVANT

| Category* | Citation of document, with indication, where appropriate, of the relevant passages | Relevant to claim No. |
| --- | --- | --- |
| Y<br>A | JP 2013-49021 A (TOYOBO CO., LTD.) 14 March 2013, paragraphs [0008], [0020]-[0023] (Family: none) | 1<br>2 |
| A | JP 5205650 B2 (KURARAY KURAFLEX CO., LTD.) 05 June 2013 (Family: none) | 1-1 |
| A | JP 2002-1020 A (TORAY INDUSTRIES, INC.) 08 January 2002 (Family: none) | 1-2 |
| A | JP 2010-64010 A (JAPAN VILENE COMPANY, LTD.) 25 March 2010 (Family: none) | 1-2 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002001020 A
- JP 2003205210 A
- JP 2004066026 A
- JP 2011012372 A
- JP 2005264374 A

**Non-patent literature cited in the description**

- *CHEMICAL ABSTRACTS,* 68439-46-3